# EUROPÄISCHE PATENTSCHRIFT

(11) **EP 0 671 033 B1**
(45) Veröffentlichungstag und Bekanntmachung des Hinweises auf die Patenterteilung: **22.07.1998**
(21) Anmeldenummer: 94900046.7
(22) Anmeldetag: 18.11.1993
(51) Int. Cl.: G06F 13/40

(54) **ANORDNUNG ZUR ÜBERTRAGUNG VON DATEN ÜBER EINEN BUS**
ARRANGEMENT FOR TRANSMITTING DATA OVER A BUS
DISPOSITIF POUR LA TRANSMISSION DE DONNEES AU MOYEN D'UN BUS

(30) Priorität: 24.11.1992 DE 4239461
(43) Veröffentlichungstag der Anmeldung: 13.09.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karlsruhe (DE)
(86) Internationale Anmeldenummer: DE9301098
(87) Internationale Veröffentlichungsnummer: WO9412936

(56) Entgegenhaltungen:
- EP-A- 0 466 970
- US-A- 5 113 369
- ELECTRONIC DESIGN, Bd. 33, Nr. 12, Mai 1985, HASBROUCK HEIGHTS, NEW JERSEY, Seiten 219 - 225 C.K. ZOCH ET AL. '68020 dynamically adjusts its data transfers to match peripheral ports'

## Beschreibung

Die Erfindung betrifft eine Anordnung zur Übertragung von Daten über einen Bus mit einer Zentraleinheit, welche die Datenübertragung initiiert, und mit einer oder mehreren peripheren Einheiten, die über den Bus miteinander verbunden sind.

Eine derartige Anordnung ist aus der DE-PS 31 33 407 bekannt. Dort ist ein Prozessor als Zentraleinheit mit einem Speicher als periphere Einheit über einen Bus verbunden. Der Bus enthält Datenleitungen, deren Anzahl der Wortbreite entspricht, Adreßleitungen zur Adressierung der einzelnen Speicherzellen und Steuerleitungen zur Steuerung der Datenübertragung. Die Datenübertragung kann wahlweise als 8 Bit breite Byte-Zugriffe oder 16 Bit breite Wortzugriffe erfolgen. Zur Auswahl der Zugriffsart ist neben den Signalen READ und WRITE noch ein Signal BYTE vorgesehen, das in einem Steuersignaldecoder ausgewertet wird. Der Prozessor arbeitet ein festes Mikroprogramm ab, das auf die spezielle Hardware-Konfiguration zugeschnitten ist. Eine Änderung der Anzahl der Datenleitungen führt also zwangsläufig zu einer Änderung des Mikroprogramms. Z. B. kann der Speicher nicht ohne weiteres durch einen Speicher einer anderen Datenbreite ersetzt werden.

Bei elektronischen, modular aufgebauten Geräten, in denen die Komponenten Zentraleinheit, periphere Einheit und Bus austauschbar sind, existieren sowohl kostengünstige Geräte mit geringer Datenbusbreite als auch Geräte der oberen Leistungsklasse, die durch einen Datenbus großer Breite gekennzeichnet sind.

Der Erfindung liegt die Aufgabe zugrunde, eine Anordnung zu schaffen, bei der Komponenten der verschiedenen Leistungsklassen beliebig miteinander kombiniert werden können.

Zur Lösung dieser Aufgabe weist die neue Anordnung die Merkmale des Anspruchs 1 auf. In den Unteransprüchen 2 bis 7 sind vorteilhafte Ausführungsformen angegeben. In den Unteransprüchen 8 und 9 sind Komponenten für eine derartige Anordnung beschrieben.

Die Erfindung hat den Vorteil, daß Komponenten verschiedener Leistungsklassen in einem modularen Gerät miteinander kombiniert werden können. Zum Anschluß einer Zentraleinheit oder peripherer Einheiten an den Bus, der als Rückwandverdrahtung in einem Baugruppenträger ausgeführt sein kann, werden keine besonderen, nur für Baugruppen bestimmter Leistungsklassen geeignete Steckplätze benötigt. Die Baugruppen der verschiedenen Leistungsklassen können erfindungsgemäß an jedem beliebigen Steckplatz angeordnet werden. Es ist z. B. der Betrieb von Baugruppen mit 32-Bit-Datenbusbreite in einem Baugruppenträger mit 8-Bit-Datenbusbreite in der Rückwandverdrahtung möglich. Auf diese Weise erlaubt die Erfindung eine allmähliche Leistungssteigerung von 8- auf 32-Bit-Datenbusbreite durch Austausch einzelner Komponenten in einem quasi fließenden Übergang, ohne daß in einem Zug das komplette Gerät ausgetauscht werden muß. Die erfindungsgemäße Anordnung ermöglicht den Einsatz zukünftiger, leistungsfähiger Komponenten in einem heutigen Baugruppenträger, während gleichzeitig heute übliche Komponenten in einem zukünftigen Baugruppenträger einsetzbar sind. Ein schaltungstechnischer Mehraufwand auf den Komponenten des unteren Leistungsbereichs entsteht durch diese Freizügigkeit nicht.

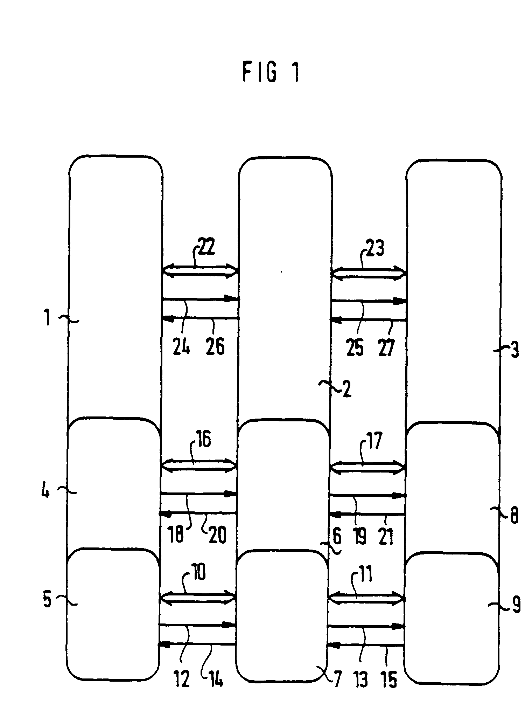

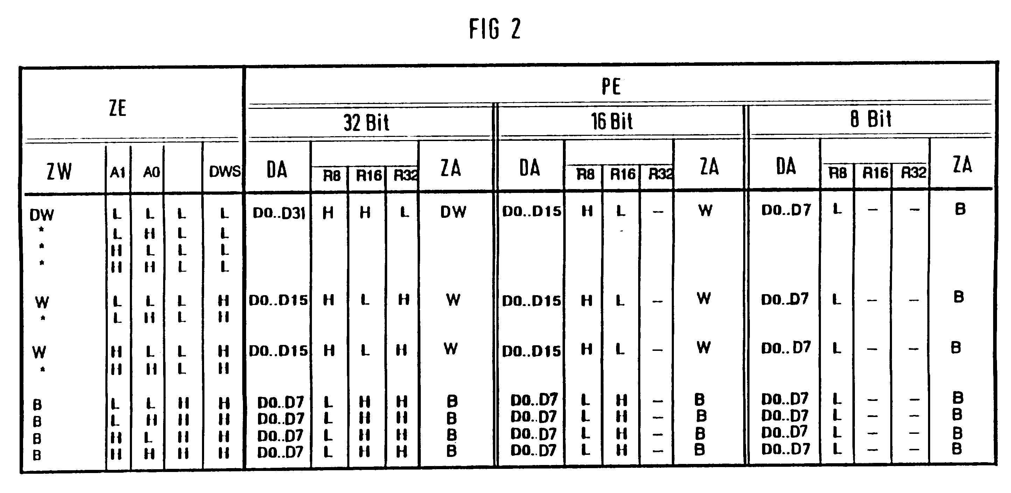

Anhand Figur 1, in der ein Ausführungsbeispiel der Erfindung dargestellt ist, und Figur 2, welche die zugehörige Signalcodierung in Tabellenform zeigt, werden im folgenden die Erfindung sowie Ausgestaltungen und Vorteile näher erläutert.

Ein modulares Gerät weist nach Figur 1 eine Zentraleinheit 1, einen Bus 2 und eine periphere Einheit 3 auf, die jeweils einen 32 Bit breiten Datenbus besitzen. Der Leistungsumfang der Zentraleinheit 1 schließt den einer Zentraleinheit 4 mit 16 Bit breitem Datenbus ein, der wiederum den einer Zentraleinheit 5 mit 8 Bit breitem Datenbus umfaßt. Entsprechendes gilt für den Bus 2 und einen 16 Bit breiten Bus 6 sowie einen 8 Bit breiten Bus 7 und für die periphere Einheit 3, eine periphere Einheit 8 mit 16 Bit breitem Datenbusanschluß und eine periphere Einheit 9 mit 8-Bit-Datenbus. All diese Komponenten, die am Datenaustausch beteiligt sind, können beliebig kombiniert werden. Im einfachsten Fall wird die Zentraleinheit 5, der Bus 7 und die periphere Einheit 9 eingesetzt, die jeweils über einen 8 Bit breiten Datenbusanschluß verfügen. Bei diesem Mindestausbau sind Verbindungselemente 10 und 11 zur Übertragung von Datensignalen D0 ... D7, Verbindungselemente 12 und 13 zur Übertragung von Steuersignalen RD (READ), WR (WRITE) und BL (BUS LOCK) sowie Verbindungselemente 14 und 15 zur Übertragung eines Steuersignals R8 (READY 8 BIT) als Quittungssignal für 8-Bit-Datenübertragungen vorhanden. Auf den zeitlichen Ablauf einer Datenübertragung muß nicht näher eingegangen werden, da er dem zuständigen Fachmann geläufig ist. In einem modularen Gerät der mittleren Leistungsklasse mit jeweils 16 Bit breitem Datenbusanschluß der Zentraleinheit 4, des Busses 6 und der peripheren Einheit 8 kommen Verbindungselemente 16 und 17 zur Übertragung von Datensignalen D8 ... D15, Verbindungselemente 18 und 19 zur Übertragung eines Steuersignals WS (WORD SELECT), das 16-Bit-Wortzugriffe kennzeichnet, sowie Verbindungselemente 20 und 21 zur Übertragung eines Steuersignals R16 (READY 16 BIT), das als Quittungssignal für 16-Bit-Datenübertragungen verwendet wird, hinzu. Für den Maximalausbau mit jeweils 32-Bit-Datenbus in der Zentraleinheit 1, dem Bus 2 und der peripheren Einheit 3 werden diese erweitert um Verbindungselemente 22 und 23 zur Übertragung von Datensignalen D16 ... D31, um Verbindungselemente 24 und 25 zur Übertragung eines Steuersignals DWS (DOUBLE WORD SELECT), mit dem ein 32-Bit-Doppelwortzugriff ausgewählt werden kann, und um Verbindungselemente 26 und 27 zur Übertragung eines Steuersignals R32 (READY 32 BIT) als Quittungssignal für 32-Bit-Datenübertragungen. Zur Adressierung erforderliche Adreßsignale A0 ... A17 sind in Figur 1 der Übersichtlichkeit wegen nicht dargestellt. Lese- und Schreibzugriffe können im Maximalausbau sowohl doppelwort-, wort- als auch byteweise, d. h. mit 32-Bit-, 16-Bit- oder 8-Bit-Datenbreite, durchgeführt werden. Wenn allerdings eine der Komponenten Zentraleinheit, Bus oder periphere Einheit eine geringere Datenbusbreite aufweist, beschränkt diese die Datenbreite der Zugriffe. Die Umsetzung beispielsweise eines 32-Bit-Zugriffs der Zentraleinheit 1 in geeignete 8- oder 16-Bit-Zugriffe übernimmt ein Bus-Interface, das in der Zentraleinheit 1 integriert ist. Als periphere Einheiten können somit kostengünstige Steckbaugruppen mit 8-Bit-Datenbusanschluß eingesetzt werden. Aufgrund der Steuersignale wickelt dann das Bus-Interface alle Schreib- und Lesezugriffe am Bus grundsätzlich in Form von Byte-Zugriffen ab.

Die Erfindung ist ohne weiteres auch in einem komplexeren Automatisierungsgerät einsetzbar, in dem sich die Zentraleinheit 1 in einem zentralen Baugruppenträger und die periphere Einheit 3 in einem Erweiterungsbaugruppenträger befinden. Der Bus 2 wird dann durch ein Interface-Modul der beiden Baugruppenträger realisiert, und die Verbindungselemente zwischen den einzelnen Komponenten entsprechen den Rückwandverdrahtungen der einzelnen Baugruppenträger.

Anhand der Tabelle in Figur 2 wird im folgenden die Codierung der einzelnen Steuersignale sowie der Ablauf der Datenübertragung erläutert. In der linken, durch dicke Striche abgetrennten Spaltengruppe sind der Zugriffswunsch ZW, die Adreßsignale A1 und A0 sowie die Steuersignale WS (WORD SELECT) und DWS (DOUBLE WORD SELECT) aufgetragen. Die rechte Spaltengruppe enthält jeweils für periphere Einheiten PE mit 32-, 16- und 8-Bit-Datenbreite eine Angabe der benutzten Datenleitungen DA, den Zustand der Quittungssignale R8, R16 und R32 sowie die realisierte Zugriffsart ZA. Die Zeilen der Tabelle enthalten jeweils die Zustände der Signale für einen bestimmten Zugriffswunsch ZW. Die Kennzeichnung L entspricht dabei einem Low-Zustand auf einer Signalleitung, die Kennzeichnung H einem High-Zustand. Für die Adreßsignale A1 und A0 bedeutet der Low-Zustand die Ausgabe des Wertes "0", für die Steuersignale WS, DWS, R8, R16 und R32 stellt er den aktiven Zustand dar.

Ein Doppelwortzugriff der Zentraleinheit ZE auf eine gerade Wortadresse (A0 = L, A1 = L) entsprechend der ersten Zeile der Tabelle wird mit den Signalzuständen WS = L und DWS = L signalisiert. Diese Signalzustände stellen sich bei der peripheren Einheit PE nur ein, wenn die Signale auf dem gesamten Signalpfad bis zur peripheren Einheit PE nicht irgendwo "verlorengehen". Dies ist nur der Fall, wenn alle Komponenten über einen 32-Bit-Datenbusanschluß verfügen. Eine periphere Einheit mit 32-Bit-Datenbus empfängt unter dieser Voraussetzung die Signalzustände unverfälscht, quittiert mit einem Low-Zustand L auf dem Quittungssignal R32 und überträgt mit den Datensignalen D0 ... D31 in der Doppelwortzugriffsart DW. Die Übertragung des Doppelwortes ist damit beendet. Ist der Doppelwortzugriffswunsch DW der Zentraleinheit ZE dagegen auf eine periphere Einheit PE mit 16-Bit-Datenbusanschluß gerichtet, die keinen Anschluß für das Steuersignal DWS aufweist, so empfängt diese lediglich den Low-Zustand L des Steuersignals WS. Für diese periphere Einheit PE gleicht der Doppelwortzugriffswunsch DW einem Wortzugriffswunsch W. Sie quittiert also mit einem Low-Zustand L des Quittungssignals R16 diesen Zugriffswunsch und führt in der Zugriffsart W den Zugriff mit den Datensignalen D0 ... D15 aus. Das Bus-Interface der Zentraleinheit ZE, das an dem Low-Zustand des Quittungssignals R16 den Wortzugriff erkennt, führt zur Vervollständigung des Doppelwortzugriffs einen weiteren Wortzugriff auf die nächst höhere Adresse aus, der durch die Signalzustände in der siebten Zeile der Tabelle gekennzeichnet ist. Dabei kann, um eine aufeinanderfolgende Übertragung der beiden Datenworte zu gewährleisten, das in der Tabelle nicht aufgeführte Signal BL (BUS LOCK) auf aktiven Zustand gesetzt werden. Nach erfolgter Übertragung des vollständigen Doppelwortes wird das Signal BL wieder zurückgenommen.

Eine periphere Einheit PE mit 8-Bit-Datenbusanschluß empfängt weder das Steuersignal WS noch das Steuersignal DWS. Einen Doppelwortzugriffswunsch DW interpretiert sie als Byte-Zugriff B, quittiert mit einem Low-Zustand auf dem Steuersignal R8 und führt die Übertragung des Bytes auf den Datenleitungen D0 ... D7 durch. Das Bus-Interface in der Zentraleinheit ZE erkennt an dem Quittungssignal R8 den erfolgten Byte-Zugriff und führt darauf folgend bei aktivem Signal BL die verbleibenden drei Byte-Zugriffe der Doppelwortübertragung auf jeweils inkrementierte Adressen durch. Die Codierungen der Zustände für diese drei Zugriffe sind den Zeilen 10, 11 und 12 der Tabelle zu entnehmen. Diese Byte-Zugriffe sind identisch mit denen einer Zentraleinheit mit 8-Bit-Datenbusanschluß. Aus der Sicht der peripheren Einheit mit 8-Bit-Datenbusbreite gibt es daher keinen merklichen Unterschied zwischen den verschiedenen Zentraleinheiten. Selbstverständlich kann die Zentraleinheit ZE mit 32-Bit-Datenbusanschluß auch einen Wort- oder Byte-Zugriffswunsch abgeben, zu denen die Signalzustände in den Zeilen 5, 7 und 9 ... 12 der Tabelle angegeben sind. Die durch einen "*" gekennzeichneten Zugriffswünsche sind in dem Ausführungsbeispiel nicht vorgesehen. Ein "-" als Signalzustand der Quittungssignale R16 oder R32 in der Tabelle bedeutet, daß für dieses Signal von der entsprechenden Einheit kein Zustand generiert wird, so daß die Zentraleinheit ZE für dieses Signal immer einen High-Zustand empfängt, der durch eine Beschaltung der Signalleitung mit einem PULL-UP-Widerstand sichergestellt ist.

Wenn die Signalpfade zu einer peripheren Einheit mit 32-Bit-Datenbusanschluß nur in 16-Bit- oder 8-Bit-Datenbusbreite verbunden sind, reagiert diese auf Doppelwort- und Wortzugriffe wie eine periphere Einheit mit 16- oder 8-Bit-Datenbusanschluß. Ebenso reagiert eine periphere Einheit mit 16-Bit-Datenbusanschluß bei 8-Bit-Datenbusbreite auf Doppelwort- und Wortzugriffe wie eine periphere Einheit mit 8-Bit-Datenbusanschluß.

Doppelwortzugriffswünsche einer Zentraleinheit mit 8-Bit-Datenbusanschluß werden immer als vier aufeinanderfolgende Byte-Zugriffe über die Datensignale D0 ... D7 mit aktiviertem Steuersignal BL realisiert. Entsprechend finden Doppelwortzugriffe einer Zentraleinheit mit 16-Bit-Datenanschluß als zwei aufeinanderfolgende Wortzugriffe statt.

Muß ein Doppelwortzugriff auf eine ungerade Wortadresse durchgeführt werden (A0 = H oder A1 = H), so lösen auch Zentraleinheiten mit 32-Bit-Datenbusanschluß diesen Zugriff in mehrere aufeinanderfolgende Busoperationen bei aktiviertem Steuersignal BL auf.

## Patentansprüche

1. Anordnung zur Übertragung von Daten über einen Bus (2, 6, 7) mit einer Zentraleinheit (1, 4, 5), welche die Datenübertragung initiiert, und mit einer oder mehreren peripheren Einheiten (3, 8, 9), die über den Bus miteinander verbunden sind, wobei die Einheiten und der Bus erste Steuerleitungen für ein erstes Übertragungsanforderungssignal der Zentraleinheit und für ein erstes Übertragungsquittungssignal einer peripheren Einheit zur parallelen Übertragung eines Datenwortes einer ersten Datenbreite aufweisen und wobei mindestens eine Einheit und/oder der Bus zweite Steuerleitungen zur parallelen Übertragung eines Datenwortes einer zweiten Datenbreite aufweist, die ein zweites Übertragungsanforderungssignal und ein zweites Übertragungsquittungssignal führen, derart, daß das zweite Übertragungsanforderungssignal in der peripheren Einheit und das zweite Übertragungsquittungssignal in der Zentraleinheit nur dann einen aktiven Zustand einnehmen, wenn alle an der Übertragung beteiligten Einrichtungen zweite Steuerleitungen aufweisen.

2. Anordnung nach Anspruch 1, **dadurch gekennzeichnet,**
- daß die zweite Datenbreite ein Vielfaches der ersten ist.

3. Anordnung nach Anspruch 2, **dadurch gekennzeichnet,**
- daß die Einheiten und der Bus eine weitere Steuerleitung zur Anzeige einer Busbelegung aufweisen, die bei einer Übertragung eines Datenwortes der zweiten Datenbreite aktiviert wird, wenn nicht alle an der Übertragung beteiligten Einrichtungen zweite Steuerleitungen aufweisen, so daß das Datenwort zweiter Datenbreite durch eine Übertragung einer dem Vielfachen entsprechenden Anzahl aufeinanderfolgender Datenworte erster Datenbreite übertragen wird.

4. Anordnung nach einem der vorhergehenden Ansprüche, **dadurch gekennzeichnet,**
- daß entsprechend den zweiten Steuerleitungen weitere Steuerleitungen zur parallelen Übertragung von Datenworten einer oder mehrerer weiterer Datenbreiten vorhanden sind.

5. Anordnung nach Anspruch 4, **dadurch gekennzeichnet,**
- daß die erste Datenbreite 8 Bit beträgt, die zweite 16 Bit und eine weitere 32 Bit.

6. Anordnung nach einem der vorhergehenden Ansprüche, **dadurch gekennzeichnet,**
- daß die Einheiten Steckbaugruppen und der Bus die Rückwandverdrahtung eines Baugruppenträgers sind.

7. Automatisierungsgerät mit einer Anordnung zur Übertragung von Daten über einen Bus (2, 6, 7) nach einem der vorhergehenden Ansprüche.

8. Zentraleinheit zur Verwendung in einer Anordnung nach einem der vorhergehenden Ansprüche, **dadurch gekennzeichnet,**
- daß Mittel zur Verbindung mit einer oder mehreren peripheren Einheiten (3, 8, 9) über einen Bus vorhanden sind,
- daß erste Steuerleitungen für ein erstes Übertragungsanforderungssignal und für ein erstes Übertragungsquittungssignal einer peripheren Einheit zur parallelen Übertragung eines Datenwortes einer ersten Datenbreite vorhanden sind und
- daß zweite Steuerleitungen zur parallelen Übertragung eines Datenwortes einer zweiten Datenbreite vorhanden sind, die ein zweites Übertragungsanforderungssignal und ein zweites Übertragungsquittungssignal führen, derart, daß das zweite Übertragungsquittungssignal in der Zentraleinheit nur dann einen aktiven Zustand einnimmt, wenn alle an der Übertragung beteiligten Einrichtungen zweite Steuerleitungen aufweisen.

9. Periphere Einheit zur Verwendung in einer Anordnung nach einem der vorhergehenden Ansprüche, **dadurch gekennzeichnet,**
- daß Mittel zur Verbindung mit einer Zentraleinheit (1, 4, 5) über einen Bus vorhanden sind,
- daß erste Steuerleitungen für ein erstes Übertragungsanforderungssignal der Zentraleinheit und für ein erstes Übertragungsquittungssignal zur parallelen Übertragung eines Datenwortes einer ersten Datenbreite vorhanden sind und
- daß zweite Steuerleitungen zur parallelen Übertragung eines Datenwortes einer zweiten Datenbreite vorhanden sind, die ein zweites Übertragungsanforderungssignal und ein zweites Übertragungsquittungssignal führen, derart, daß das zweite Übertragungsanforderungssignal in der peripheren Einheit nur dann einen aktiven Zustand einnimmt, wenn alle an der Übertragung beteiligten Einrichtungen zweite Steuerleitungen aufweisen.

## Claims

1. Arrangement for the transmission of data by way of a bus (2, 6, 7) with a central unit (1, 4, 5) which initiates the data transmission and with one or more peripheral units (3, 8, 9) which are connected to each other by way of the bus, wherein the units and the bus have first control lines for a first transmission request signal of the central unit and for a first transmission acknowledgement signal of a peripheral unit for the parallel transmission of a data word of a first data width, and wherein at least one unit and/or the bus has second control lines for the parallel transmission of a data word of a second data width, which carry a second transmission request signal and a second transmission acknowledgement signal in such a way that the second transmission request signal in the peripheral unit and the second transmission acknowledgement signal in the central unit only occupy an active state when all the devices taking part in the transmission have second control lines.

2. Arrangement according to claim 1, characterized in that the second data width is a multiple of the first one.

3. Arrangement according to claim 2, characterized in that the units and the bus have an additional control line to indicate a bus usage, which is activated upon a transmission of a data word of the second data width if not all the devices taking part in the transmission have second control lines, with the result that the data word of the second data width is transmitted by means of a transmission of a number of successive data words of the first data width, which number corresponds to the multiple.

4. Arrangement according to one of the preceding claims, characterized in that corresponding to the second control lines there are additional control lines for the parallel transmission of data words of one or more additional data widths.

5. Arrangement according to claim 4, characterized in that the first data width amounts to 8 bit, the second 16 bit and an additional one 32 bit.

6. Arrangement according to one of the preceding claims, characterized in that the units are plug-in modules and the bus is the back-panel wiring of a mounting rack.

7. Programmable controller with an arrangement for the transmission of data by way of a bus (2, 6, 7) according to one of the preceding claims.

8. Central unit for use in an arrangement according to one of the preceding claims, characterized in that
- there are means for connection with one or more peripheral units (3, 8, 9) by way of a bus,
- there are first control lines for a first transmission request signal and for a first transmission acknowledgement signal of a peripheral unit for the parallel transmission of a data word of a first data width, and
- there are second control lines for the parallel transmission of a data word of a second data width which carry a second transmission request signal and a second transmission acknowledgement signal in such a way that the second transmission acknowledgement signal in the central unit only occupies an active state when all the devices taking part in the transmission have second control lines.

9. Peripheral unit for use in an arrangement according to one of the preceding claims, characterized in that
- there are means for connection with a central unit (1, 4, 5) by way of a bus,
- there are first control lines for a first transmission request signal of the central unit and for a first transmission acknowledgement signal for the parallel transmission of a data word of a first data width, and
- there are second control lines for the parallel transmission of a data word of a second data width which carry a second transmission request signal and a second transmission acknowledgement signal in such a way that the second transmission request signal in the peripheral unit only occupies an active state when all the devices taking part in the transmission have second control lines.

## Revendications

1. Dispositif pour la transmission de données par l'intermédiaire d'un bus (2, 6, 7), comprenant une unité centrale (1, 4, 5) qui déclenche la transmission de données et une ou plusieurs unités périphériques (3, 8, 9) qui sont reliées entre elles par l'intermédiaire du bus, dans lequel les unités et le bus comportent des premières lignes de commande pour un premier signal de demande de transmission de l'unité centrale et pour un premier signal d'accusé de réception de transmission d'une unité périphérique en vue de la transmission parallèle d'un mot de données d'une première largeur de données et dans lequel au moins une unité et/ou le bus comportent des deuxièmes lignes de commande en vue de la transmission parallèle d'un mot de données d'une deuxième largeur de données, lesquelles deuxièmes lignes de commande conduisent un deuxième signal de demande de transmission et un deuxième signal d'accusé de réception de transmission, de telle sorte que le deuxième signal de demande de transmission dans l'unité périphérique et le deuxième signal d'accusé de réception de transmission dans l'unité centrale ne prennent un état actif que si tous les dispositifs participant à la transmission comportent des deuxièmes lignes de commande.

2. Dispositif selon la revendication 1, caractérisé par le fait que la deuxième largeur de données est un multiple de la première.

3. Dispositif selon la revendication 2, caractérisé par le fait que les unités et le bus comportent une autre ligne de commande qui est destinée à l'indication d'une occupation de bus et qui est activée lors d'une transmission d'un mot de données de la deuxième largeur de données si tous les dispositifs participant à la transmission ne comportent pas de deuxièmes lignes de commande, de telle sorte que le mot de données de la deuxième largeur de données est transmis au moyen d'une transmission d'un nombre, correspondant au multiple, de mots de données consécutifs de la première largeur de données.

4. Dispositif selon l'une des revendications précédentes, caractérisé par le fait que, comme les deuxièmes lignes de commande, il y a d'autres lignes de commande en vue de la transmission parallèle de mots de données d'une ou plusieurs autres largeurs de données.

5. Dispositif selon la revendication 4, caractérisé par le fait que la première largeur de données vaut 8 bits, la deuxième vaut 16 bits et une autre vaut 32 bits.

6. Dispositif selon l'une des revendications précédentes, caractérisé par le fait que les unités sont des modules enfichables et le bus est le câblage sur panneau arrière d'un fond de panier.

7. Appareil d'automatisation comportant un dispositif pour la transmission de données par l'intermédiaire d'un bus (2, 6, 7) selon l'une des revendications précédentes.

8. Unité centrale pour une utilisation dans un dispositif selon l'une des revendications précédentes, caractérisée par le fait que
il y a des moyens pour la liaison avec une ou plusieurs unités périphériques (3, 8, 9) par l'intermédiaire d'un bus,
il y a des premières lignes de commande pour un premier signal de demande de transmission et pour un premier signal d'accusé de réception de transmission d'une unité périphérique en vue de la transmission parallèle d'un mot de données d'une première largeur de données, et
il y a des deuxièmes lignes de commande en vue de la transmission parallèle d'un mot de données d'une deuxième largeur de données, lesquelles deuxièmes lignes de commande conduisent un deuxième signal de demande de transmission et un deuxième signal d'accusé de réception de transmission, de telle sorte que le deuxième signal d'accusé de réception de transmission dans l'unité centrale ne prend un état actif que si tous les dispositifs participant à la transmission comportent des deuxièmes lignes de commande.

9. Unité périphérique pour une utilisation dans un dispositif selon l'une des revendications précédentes, caractérisée par le fait que
il y a des moyens pour la liaison avec une unité centrale (1, 4, 5) par l'intermédiaire d'un bus,
il y a des premières lignes de commande pour un premier signal de demande de transmission de l'unité centrale et pour un premier signal d'accusé de réception de transmission en vue de la transmission parallèle d'un mot de données d'une première largeur de données, et
il y a des deuxièmes lignes de commande en vue de la transmission parallèle d'un mot de données d'une deuxième largeur de données, lesquelles deuxièmes lignes de commande conduisent un deuxième signal de demande de transmission et un deuxième signal d'accusé de réception de transmission, de telle sorte que le deuxième signal de demande de transmission dans l'unité périphérique ne prend un état actif que si tous les dispositifs participant à la transmission comportent des deuxièmes lignes de commande.
